# EUROPEAN PATENT APPLICATION

(11) **EP 3 591 181 A1**
(43) Date of publication of application: **08.01.2020**
(21) Application number: 18181361.9
(22) Date of filing: 03.07.2018
(51) Int. Cl.: F01N 3/20, F01N 3/30, F01N 3/22, F01N 9/00, F01N 11/00, F01N 13/08, F01N 13/00

(54) **INTERNAL COMBUSTION ENGINE AND METHOD OF MEASURING A COMPONENT OF EXHAUST IN AN EXHAUST GAS**

(71) Applicant: Winterthur Gas & Diesel Ltd., 8401 Winterthur (CH)
(72) Inventor: Hendry, Dominic, 8037 Zürich (CH); Soppelsa, Flavio, 8595 Altnau (CH)
(74) Representative: Hepp Wenger Ryffel AG

(57) **Abstract**

An internal combustion engine (1) comprises at least one cylinder (1a) with a cylinder outlet (2) for an exhaust gas of the cylinder. The internal combustion engine (1) comprises a main exhaust pipe (3) connected to each cylinder outlet (2) and a bypass pipe (4) bypassing at least part of the main exhaust pipe (3). The bypass pipe (4) preferably has a smaller volume than the main exhaust pipe (3), in particular a smaller volume than the part of the main exhaust pipe which is bypassed. The bypass pipe (4) comprises a measurement opening (5) for inserting a sensor (6) or a measurement device for determining components of the exhaust.

## Description

The present invention is directed to an internal combustion engine and a method of measuring a component of exhaust in an exhaust gas according to the preamble of the independent claims.

It is known in the prior art to clean exhaust from internal combustion engines. There are several cleaning principals for removing different unwanted components such as NOx, COx or sulfuric compounds known from the prior art. Presently, all of the cleaning mechanisms are based on a rough indication of how much the proportion of the unwanted compound is and thus how much can be cleaned and has to be cleaned.

It is therefore an object of the present invention to avoid the disadvantages of the prior art and in particular to create an internal combustion engine and a method of measuring a component of exhaust in an exhaust gas which allow for a more exact determination of a component of exhaust in an exhaust gas.

The object is achieved by an internal combustion engine and a method of measuring a component of exhaust in an exhaust gas according to the independent claims.

The object is in particular achieved by an internal combustion engine, preferably a two-stroke, cross-head large ship engine, comprising at least one cylinder with a cylinder outlet for an exhaust gas of the cylinder. The internal combustion engine comprises a main exhaust pipe connected to each cylinder outlet and a bypass pipe bypassing at least part of the main exhaust pipe. The bypass pipe preferably has a smaller volume, in particular smaller diameter, than the main exhaust pipe, in particular a smaller volume than the part of the main exhaust pipe which is bypassed. The bypass pipe comprises a measurement opening for inserting a sensor or a measurement device for determining components of the exhaust.

Such an internal combustion engine allows for measuring components of the exhaust in a bypassed exhaust portion which leads to the general possibility of determining the component on the one hand and to more accurate measurements results on the other hand.

A large ship engine according to this invention is an internal combustion engine whose cylinders have an inner diameter of at least 200mm. The engine preferably is a two-stroke, cross-head engine. The engine can be a diesel or a dual-fuel engine.

The main exhaust pipe according to this invention is the exhaust pipe arranged between cylinder outlets and turbocharger.

A sensor can be inserted into the measurement opening, preferably a NOx sensor.

By inserting a sensor into the measurement opening the specific component of interest can be determined. In case NOx is of interest a sensor is a NOx sensor. A sensor according to the invention is a measuring device which is fixed to the bypass pipe to measure the component of interest during use of the engine and in particular continuously stays mounted on the bypass pipe. A measurement device can be inserted into the opening when needed and is removed after the measurement.

This leads to the possibility of directly measuring the component of the exhaust gas and enables the adaption of the cleaning system, in particular downstream of the sensor or in parallel to the sensor, to be dosed adequately for the measured value.

The bypass pipe can comprise connection pipes to connect to each cylinder such that the exhaust from each cylinder is guidable through the bypass pipe.

Through the connection pipes a fraction of the exhaust gas of every cylinder is lead through the bypass pipe while the majority of the exhaust gas is still lead through the main exhaust pipe. The connection to each cylinder leads to the same relative mixture of exhaust in the bypass pipe and the main exhaust pipe and thus to more accurate measurement results.

The bypass pipe can comprise a first diameter at a first position and a second diameter at a second position, wherein the second position is arranged downstream the first position and the second diameter is larger than the first diameter.

The diameter according to this invention corresponds to the cross-section in case of none circular pipes.

This way the gas being lead through the bypass pipe is relaxed because the volume of bypass pipe is increased. This leads to the cooling-down of the exhaust gas and thereby to the possibility to measure at lower temperatures especially in cases where the sensors or the measurement devices are not capable of measuring or measuring exactly at a higher temperature and/or pressure.

The internal combustion engine can additionally comprise an SCR reactor for reducing a concentration of NOx in the exhaust gas, wherein the SCR reactor is arranged in the main exhaust pipe and at least one reductant injector is arranged upstream of the SCR reactor.

The SCR reactor according to this invention is defined as the layer of the catalyst where the catalytic reaction takes place. There is no specific need for a frame or a box around the catalytic layers of the SCR reactor even though this is not excluded.

The use of an SCR reactor in the main exhaust pipe enables the reduction of NOx in the majority of the exhaust even though the measurement of NOx in the exhaust is not dependent on the fraction of the exhaust being lead through the main exhaust pipe. Furthermore, by separating the measurement fraction from the main fraction there is no need to place any sensor directly at the cylinder or cylinder outlet, since the reductant injector has to be arranged upstream of the SCR reactor and there is simply hardly space for an additional sensor close to the cylinders. Furthermore, the sensor according to this invention is able to measure a correct value of NOx corresponding to the NOx value in the main exhaust fraction since exhausts from all cylinders are taken into account. The reductant injector can be adapted to inject urea, ammonia or other reduction means which are able to enhance the reduction reaction in the SCR.

In case of another part of the exhaust, e.g. such as sulphur (or sulphur-compounds), particles, CO, CO₂, HC or CH₄ being of interest the SCR reactor is obviously not necessary. In case of sulphur (or sulphur-compounds) for example that SCR reactor can be substituted by a washer or scrubber. In case of particles a particle filter can be used as exhaust cleaning device. For CO, HC or CH₄ an oxidation catalyst can be used. For CO₂ it would be possible to use a CO₂ collector or a CO₂ scrubber. Also scrubbers or combinations of exhaust cleaning devices can be used. In this case additionally the corresponding sensors or measurement device are used, so a CO-sensor, CO₂-sensor, HC-sensor, CH₄-sensor, sulfur-sensor or particle sensor. Alternatively all those sensors can be built as measurement devices.

The bypass pipe, in particular the connection pipes, can comprise at least one restriction means, in particular an orifice or/and a check valve.

By use of a restriction means the volume of exhaust being able to pass the bypass pipe or the connection pipe is reduced and thereby an optimized mixture of gas from all cylinders is achieved. The restriction means may possibly not be arranged in all of the connection pipes to create a comparable flow of exhaust from each cylinder to the bypass pipe such that the mixture of exhaust from all the cylinders in the bypass pipe corresponds to the mixture in the main exhaust pipe. The check valve obviates a back flow of gas from the bypass pipe to the cylinder.

This leads to more accurate measurement results.

The bypass pipe can comprise a jet nozzle arranged such that a stream, preferably an air stream, is guidable onto the sensor or measurement device.

This enables cleaning and/or calibrating the sensor or measurement device without having to de-install it.

The internal combustion engine can further comprise a reductant control unit configure to control the injection of reductant base on the measurements of the sensor or measuring device, in particular NOx sensor.

This way the use of reductant can be adapted to the need and is not over- or underdosed. This leads to an optimized cleaning of the exhaust gas and simultaneously to a better durability of the engine and the exhaust system itself.

The bypass pipe can comprise a temperature regulation unit, preferably a heater.

To prevent condensation the exhaust being lead through the bypass pipe can be heated to a higher temperature, in particular a temperature above 200° C. This leads to a higher durability exhaust system.

A gas flow distance between the cylinder outlet and the measurement opening, in particular the sensor or measuring device, is at least 0,2 m.

This minimum distance leads to a homogenously mixed exhaust in the bypass pipe at the measuring point.

The connection pipes between each cylinder and the bypass pipe can be mounted above a horizontal middle axis of the bypass pipe. Since water always runs down with gravity the arrangement of the connection pipes above a horizontal middle axis leads to no fluid water being introduced into the bypass pipe.

The bypass pipe can comprise a sieve.

The arrangement of the sieve in the bypass pipe leads to an optimized mixing of the exhaust gases from different cylinders.

The bypass pipe, preferably the connection pipes, can comprise restricting means, in particular an orifice, wherein the at least one, preferably each restricting means includes a valve, preferably an orifice plate, configured to control the flow of exhaust gas through the respective restricting means.

This way the flow of exhaust gas can be controlled and an optimal mixture of gas from every cylinder can be achieved.

The internal combustion engine can comprise at least two cylinders and a valve control unit configured to control the valves such that a flow from each cylinder to the bypass pipe is equal.

The use of a control unit enables an automatic adaption of the flow from each cylinder.

The internal combustion engine can comprise at least two cylinders and two connection pipes wherein the diameter of the connection pipes or the restricting means in the connection pipes is different.

This way the connection pipes or the restricting means can be adapted to ensure a similar amount of gas from every cylinder is redirected to the bypass pipe. This leads to correct measurement values.

The restricting means can have the same position relative to their respective cylinder outlet and a flow distance between each cylinder outlet and the measurement opening, in particular the sensor or the measurement device, can substantially be the same.

This way an optimal mixture of exhaust gas from every cylinder is ensured.

The object of the invention is further achieved by method of measuring a component of exhaust in an exhaust gas, in particular in an internal combustion engine as previously described. The method comprises the following steps:
- Burning a fuel in at least one, preferably at least two, cylinder of an internal combustion engine
- Guiding exhaust gas from at least one, preferably each, cylinder through a main exhaust pipe
- Diverting a part of the exhaust gas through a bypass pipe parallel to the main exhaust pipe, and optionally relaxing the exhaust gas in the bypass pipe
- Measuring a concentration of a component of the exhaust gas in the bypass pipe using a measurement device or a sensor.

This method enables a more accurate and direct measurement of exhaust gas components.

The method can additionally comprise the steps of
- Guiding exhaust gas through the main exhaust pipe to an SCR reactor
- Injecting reductant into the exhaust gas in the main exhaust pipe upstream of the SCR reactor, wherein the part of the exhaust gas is diverted upstream of the reductant injection.

The invention is described in embodiments in the following by means of figures. It shows:

| | |
|---|---|
| Figure 1 | A schematic view of an internal combustion engine according to the invention |
| Figure 2 | A schematic view of an alternative embodiment of the present invention |
| Figure 3 | A schematic view of a third embodiment of the present invention |
| Figure 4 | A schematic view of a bypass pipe |
| Figure 5 | A cross-section through a main exhaust pipe connecting connection pipes. |

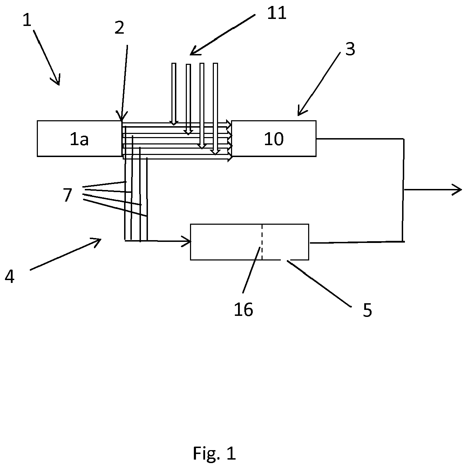

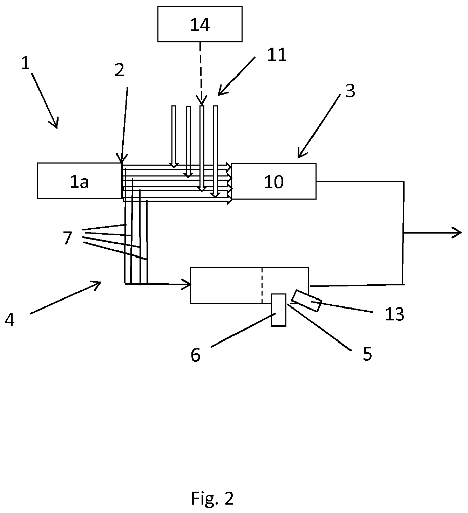

Figure 1 shows an internal combustion engine 1 comprising four cylinders 1a having cylinder outlets 2 for exhaust gas. In this figure four cylinders are described as an example, as a matter of course this could be any number between one and fourteen or even more. The internal combustion engine further comprises the usual known parts of a two-stroke, large ship engine, in particular a cross-head engine. The exhaust gas from the cylinder outlets 2 is lead through main exhaust pipe 3. The main exhaust pipe 3 is connected to each cylinder outlet 2. The internal combustion engine 1 further comprises a bypass pipe 4 bypassing at least part of the main exhaust pipe 3. The bypass pipe 4 comprises connection pipes 7 which connect the bypass pipe 4 to each cylinder 1a. This way exhaust from each cylinder 1a is diverted to the bypass pipe 4. The bypass pipe 4 comprises a measurement opening 5 through which a sensor 6 (see Fig. 2) or a measurement device is insertable into the bypass pipe 4. Furthermore, in this example the bypass pipe 4 comprises a sieve 16, which is optional. The amount of exhaust gas being diverted to the bypass pipe 4 is smaller than the amount of exhaust gas being lead through main exhaust pipe 3. The main exhaust pipe 3 comprises an SCR reactor 10 to reduce a NOx. In case of another part of the exhaust, e.g. such as sulphur, particles, CO, CO₂, HC or CH₄ being of interest the SCR reactor 10 is obviously not necessary. In case of sulphur for example that SCR reactor 10 can be substituted by a washer. In case of particles a particle filter can be used as exhaust cleaning device. For CO, HC or CH₄ an oxidation catalyst can be used. For CO₂ it would be possible to use a CO₂ collector or a CO₂ scrubber. Also scrubbers or combinations of exhaust cleaning devices can be used. Downstream the measurement opening 5 the exhaust from the bypass pipe 4 is remerged with exhaust from the exhaust pipe 3. Preferably, this remerging takes place downstream the SCR reactor 10. Upstream the SCR reactor 10 the reductant injector 11 is arranged to inject urea, ammonia or any other reductant into the exhaust for optimizing the reaction in an SCR reactor 10. After remerging the exhaust gas streams from main exhaust pipe 3 and bypass pipe 4 the exhaust is emitted to the atmosphere.

Figure 2 shows a similar embodiment compared to figure 1 additionally comprising a sensor 6 for measuring NOx and a jet nozzle 13 for injecting air into the bypass pipe 4. The injection point of jet nozzle 13 is such that the sensor 6 can be cleaned and/or calibrated by means of air stemming from jet nozzle 13. Furthermore, the internal combustion engine 1 comprises a reductant control unit 14 to control the injection amount of reductant into the exhaust in the main exhaust pipe 3 upstream the SCR reactor 10. The reductant control unit 14 is controlled based on the values of the concentration of NOx measured by sensor 6. Sensor 6 is preferably any commercially available NOx sensor for example from automotive industry.

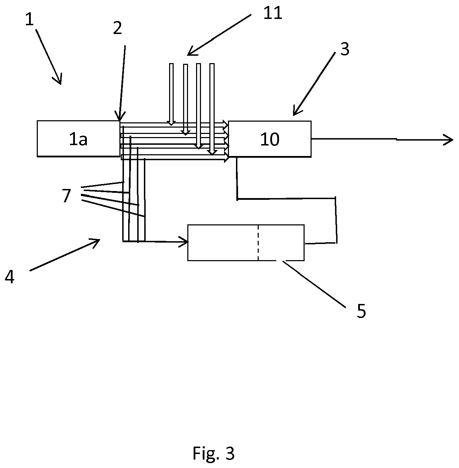

Figure 3 shows a further variant of figure 1 and/or 2 in which exhaust from bypass pipe 4 is reintroduced into the main exhaust pipe 3 upstream the SCR reactor 10. This way even the exhaust from bypass pipe 4 is cleaned in SCR reactor 10. All other features correspond to the features of figure 1 and/or 2.

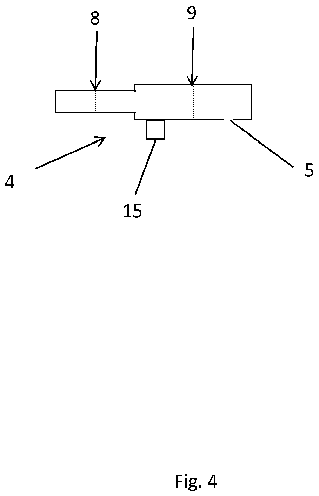

Figure 4 shows a schematic view of bypass pipe 4 comprising measurement opening 5. The bypass pipe 4 has two different diameters, a first diameter at a first position 8 and a second diameter at second position 9. Due to this volume enlargement in bypass pipe 4 the exhaust gas is relaxed and thereby cooled down. This cooling down leads to the possibility to measure any component of the exhaust gas through measurement opening 5 at lower temperatures and thereby to the possibility to use standard sensors or measurement devices. In case the relaxation leads to too low temperatures, for examples to temperatures below 200° C the bypass pipe 4 comprises a temperature control unit 15 which can heat the exhaust to a level above a pre-described temperature. This is primarily due to the fact that condensation is unwanted and usually occurs at a temperature below 200° C. By heating the exhaust a risk of condensation inside the bypass pipe 4 is decreased.

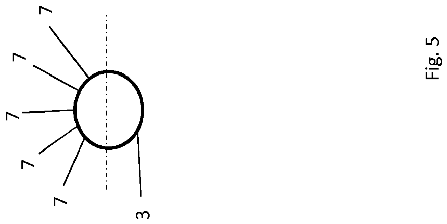

Figure 5 shows a cross-section through main exhaust pipe 3. Main exhaust pipe 3 comprises connections to bypass pipe 4 by connection pipes 7. Connection pipes 7 are all arranged above a horizontal middle axis of the main exhaust pipe. This leads to no condensate being introduced into bypass pipe 4 since all connection pipes 7 require an upward component of the exhaust when flowing from main exhaust pipe 3 to bypass pipe 4.

For achieving an equal flow of exhaust from every cylinder 1a to the bypass pipe 4 connection pipes 7 can comprise restriction means such as valves and/or orifices in all of the above mentioned embodiments. The restriction means are adapted to create the same exhaust flow through all the connection pipes thus can be similar or different in cross-section or flow capacity depending on the need. In case of valves the volume flow through the connection pipes 7 and/or the bypass pipe 4 from every cylinder 1a can additionally be controlled during operation of the engine. This can in particular be controlled by a valve control unit.

## Claims

1. Internal combustion engine (1) comprising:
- at least one cylinder (1a) with a cylinder outlet (2) for an exhaust gas of the cylinder,
- a main exhaust pipe (3) connected to each cylinder outlet (2),
- a bypass pipe (4) bypassing at least part of the main exhaust pipe (3), the bypass pipe (4) preferably having a smaller volume than the main exhaust pipe (3), in particular a smaller volume than the part of the main exhaust pipe which is bypassed,
**characterized in that**,
- the bypass pipe (4) comprises a measurement opening (5) for inserting a sensor (6) or a measurement device for determining components of the exhaust.

2. Internal combustion engine (1) according to claim 1, **characterized in that** a sensor (6) is inserted into the measurement opening (5), preferably a NOx sensor.

3. Internal combustion engine (1) according to any one of the preceding claims, **characterized in that** the bypass pipe (4) comprises connection pipes (7) to connect to each cylinder such that exhaust from each cylinder is guidable through the bypass pipe.

4. Internal combustion engine (1) according to any one of the preceding claims **characterized in that** the bypass pipe (4) comprises a first diameter at a first position (8) and a second diameter at a second position (9), wherein the second position (9) is arranged downstream the first position (8) and the second diameter is larger than the first diameter.

5. Internal combustion engine (1) according any one of the preceding claims, **characterized in that** the engine additionally comprises:
- an SCR reactor (10) for reducing a concentration of NOx in the exhaust gas, wherein the SCR reactor (10) is arranged in the main exhaust pipe (3),
- at least one reductant injector (11) arranged upstream of the SCR reactor (10).

6. Internal combustion engine (1) according to any one of the preceding claims, **characterized in that** the bypass pipe (4), in particular the connection pipes (7), comprises at least one restriction means (12), in particular an orifice and/or a check valve.

7. Internal combustion engine (1) according to any one of the preceding claims, **characterized in that** the bypass pipe (4) comprises a jet nozzle (13) arranged such that a stream, preferably an air stream, is guidable onto the sensor (6) or measurement device.

8. Internal combustion engine (1) according to one of the preceding claims, **characterized in that** the bypass pipe (4) comprises a temperature regulation unit (15), preferably a heater.

9. Internal combustion engine (1) according to one of the preceding claims, **characterized in that** a gas flow distance between the cylinder outlet (2) and the measurement opening, in particular the sensor or measurement device, is at least 0.2 m.

10. Internal combustion engine (1) according to one of the preceding claims, **characterized in that** the connection pipes (7) are mounted above a horizontal middle axis of the main exhaust pipe (3).

11. Internal combustion engine (1) according to one of the preceding claims, **characterized in that** the bypass pipe (4), preferably the connection pipes (7), comprise restricting means (17), in particular an orifice, wherein at least one, preferably each, restricting means (17) includes a valve, preferably an orifice plate, configured to control a flow of exhaust gas through the respective restricting means (17) .

12. Internal combustion engine (1) according to claim 11, wherein the engine (1) comprises at least two cylinders and a valve control unit (18) configured to control at least one valve such that a flow from each cylinder to the bypass pipe is equal.

13. Internal combustion engine (1) according to claim 11 or 12, wherein the restricting means (17) have the same position relative to their respective cylinder outlet (2) and wherein a flow distance between each cylinder outlet (2) and the measurement opening (5), in particular the sensor (6), is substantially the same.

14. Method of measuring a component of exhaust in an exhaust gas, in particular in an internal combustion engine (1) according to any one of the preceding claims, comprising the following steps:
- Burning a fuel in at least one, preferably at least two, cylinder (1a) of an internal combustion engine (1)
- Guiding exhaust gas from at least one, preferably each, cylinder (1a) through a main exhaust pipe (3)
- Diverting a part of the exhaust gas through a bypass pipe (4) parallel to the main exhaust pipe (3),
- Optionally, relaxing the exhaust gas in the bypass pipe (3),
- Measuring a concentration of a component of the exhaust gas in the bypass pipe (3) using a measurement device or a sensor (6).

15. Method according to claim 14, wherein the method additionally comprises the steps of:
- Guiding exhaust gas through the main exhaust pipe (3) to an SCR reactor (10)
- Injecting reductant into the exhaust gas in the main exhaust pipe (3) upstream of the SCR reactor (10).
